# EUROPÄISCHE PATENTSCHRIFT

(11) **EP 4 000 795 B1**
(45) Veröffentlichungstag und Bekanntmachung des Hinweises auf die Patenterteilung: **19.03.2025**
(21) Anmeldenummer: 21208079.0
(22) Anmeldetag: 12.11.2021
(51) Int. Cl.: B23P 19/06

(54) **SCHRAUBVORRICHTUNG ZUR AUTOMATISIERTEN DURCHFÜHRUNG EINES SCHRAUBVORGANGS**
SCREWING DEVICE FOR AUTOMATICALLY CARRYING OUT A SCREWING PROCESS
DISPOSITIF DE VISSAGE DESTINÉ À LA MISE EN OEUVRE AUTOMATISÉE D'UN PROCÉDÉ DE VISSAGE

(30) Priorität: 13.11.2020 DE 102020214330
(43) Veröffentlichungstag der Anmeldung: 25.05.2022
(73) Patentinhaber: DEPRAG Schulz GmbH u. Co., 92224 Amberg (DE)
(72) Erfinder: PFEIFFER, Rolf, 92224 Amberg (DE); ROSENKRANZ, Carsten, 92284 Poppenricht (DE); ZINN, Gerd, 92242 Hirschau (DE)
(74) Vertreter: FDST Patentanwälte

(56) Entgegenhaltungen:
- DE-A1- 102014 208 994
- JP-A- 2010 264 514
- JP-A- 2012 157 905
- US-A- 5 549 169
- US-A1- 2008 314 162
- US-A1- 2011 185 864

## Beschreibung

Die Erfindung betrifft eine Schraubvorrichtung zur automatisierten Durchführung eines Schraubvorgangs, bei dem eine Schraube mit einem Schraubpartner, insbesondere einem Werkstück, in Axialrichtung verschraubt wird. Schraubvorrichtungen zur automatisierten Durchführung von Schraubvorgängen weisen typischerweise eine Vorschubeinheit für eine Zustellbewegung in Axialrichtung auf. Weiterhin umfassen derartige Schraubvorrichtungen eine Dreheinheit zur Erzeugung einer Rotationsbewegung. Bei herkömmlichen Schraubvorrichtungen wird die Vorschubeinheit mithilfe von Druckluft angetrieben. Prinzipbedingt führt dies zu gewissen Beschränkungen. Jüngere Entwicklungen zielen darauf ab, Druckluftantriebe durch elektrische Antriebe zu ersetzen.

Ausgehend hiervon liegt der Erfindung die Aufgabe zugrunde, automatisierte Schraubprozesse zu optimieren.

Aus der US 5 549 169 A ist eine Schraubvorrichtung nach dem Oberbegriff des Anspruchs 1 zu entnehmen, welche eine elektromotorisch angetriebene Vorschubeinheit sowie Dreheinheit aufweist. Ein Schraubprozess wird positionsabhängig und kraftabhängig gesteuert, um ein möglichst zügiges Eindrehen der Schraube in ein Gewinde zu ermöglichen, insbesondere ohne dass das Gewinde beschädigt wird.

Weitere positions- und/oder kraftabhängig gesteuerte Schraubvorrichtungen sind beispielsweise zu entnehmen aus JP 2012 157 005 A, DE 10 2014 208 994 A1, JP 2010 264 514 A, US 2011/185 864 A1 sowie aus US 2008/314 162 A1.

Die Aufgabe wird gemäß der Erfindung gelöst durch eine Schraubvorrichtung zur automatisierten Durchführung eines Schraubvorgangs mit den Merkmalen des Anspruchs 1. Bevorzugte Weiterbildungen sind in den abhängigen Ansprüchen enthalten.

Bei der Schraubvorrichtung handelt sich insbesondere um eine Vorrichtung, die zur Montage an einer Verstellmechanik ausgebildet ist, speziell zur Montage an einer Roboterhand eines insbesondere mehrachsigen (Industrie-) Roboters oder an einem mehrachsigen Verstellsystem entlang von linearen Achsen.

Die Schraubvorrichtung umfasst eine Vorschubeinheit zur Erzeugung einer axialen Vorschubbewegung über einen Hubbereich hinweg, wobei die Vorschubeinheit hierzu einen elektrischen Vorschubmotor aufweist und zur Erfassung von momentanen Vorschubwerten ausgebildet ist, nämlich zur Erfassung einer momentanen Vorschubkraft, einer momentanen Vorschubgeschwindigkeit sowie einer momentanen axialen Position eines Vorschubteils, welches in axialer Richtung verschoben wird. Hierbei handelt sich insbesondere um einen Schlitten der Vorschubeinheit.

Weiterhin umfasst die Schraubvorrichtung eine Dreheinheit zur Erzeugung einer Rotationsbewegung mithilfe eines elektrischen Antriebsmotors, wobei die Dreheinheit zur Erfassung von momentanen Drehwerten ausgebildet ist, nämlich einer momentanen Drehzahl, einem momentanen Drehmoment sowie einem momentanen Drehwinkel. Die Schraubvorrichtung weist weiterhin einen Werkzeugkopf auf, welcher zur Führung der Schraube beim Schraubvorgang ausgebildet ist.

Unter Schraubvorgang wird vorliegend ein kompletter Zyklus verstanden von der Aufnahme der Schraube in einer Anfangsposition über das Einschrauben der Schraube in den Schraubpartner und das Zurückfahren in die Anfangsposition. Dieser Schraubvorgang wird von der Vorschubeinheit in Kombination mit der Dreheinheit ausgeübt. Der Schraubvorgang setzt sich zusammen aus einem Vorschubanteil, bei dem eine lineare Axialbewegung mit Hilfe der Vorschubeinheit ausgeführt wird und einem Drehanteil, bei dem eine Drehbewegung mit Hilfe der Dreheinheit ausgeführt wird. Teil des Schraubvorgangs ist der eigentliche Schraubprozess, bei dem die Schraube in den Schraubpartner ein- oder ausgeschraubt wird. Der Schraubprozess wird nachfolgend auch als Eindrehvorgang bezeichnet. Bei diesem Schraubprozess erfolgt regelmäßig sowohl eine Drehbewegung mit der Dreheinheit als auch ein Vorschub mit der Vorschubeinheit.

Vor Beginn des eigentlichen Schraubprozesses erfolgt regelmäßig eine Zustellbewegung des Schraubwerkzeugs mit Hilfe der Vorschubeinheit in Richtung zum Schraubpartner. Der Vorschubanteil des Schraubvorgangs umfasst also einen Zustellanteil, bei dem die Schraube noch nicht in Eingriff mit dem Schraubpartner ist und bei dem vorzugsweise keine Drehbewegung erfolgt. Unter Eingriff mit dem Schraubpartner wird der Beginn des eigentlichen Schraubprozesses verstanden. Der Beginn des eigentlichen Schraubprozesses liegt vor, wenn folgende Voraussetzungen erfüllt sind:
a) Ein Schraubwerkzeug, auch als Bit oder Klinge bezeichnet, ist in (korrektem) Eingriff mit einer Werkzeugaufnahme des Schraubenkopfes;
b) Die Schraube sitzt auf dem Schraubpartner auf;
c) Es erfolgt ein Drehen der Schraube.

Der Zustellanteil definiert also den Teil des Schraubvorgangs bis zum Beginn des eigentlichen Schraubprozesses bzw. in negativer Richtung bei einem Rückhub nach dem Schraubprozess. Das Ende des Zustellanteils ist erreicht, wenn die obigen drei Voraussetzungen erfüllt sind. Bei einem Rückhub ist der Beginn des Zustellanteils erreicht, wenn zumindest eine dieser drei Voraussetzungen wieder entfällt.

Weiterhin ist eine Zuführeinheit angeordnet, welche zur Zuführung der jeweiligen Schraube zum Werkzeugkopf ausgebildet ist. Diese Zuführeinheit ist typischerweise in einem vorderen Bereich der Schraubvorrichtung angebracht und dient allgemein zur Aufnahme einer Schraube zu Beginn des Schraubvorgangs, also des Schraubzyklus.

Die Zuführeinheit ist beispielsweise als ein Zuführ- oder Einschusskanal ausgebildet, über welchen die Schrauben beispielsweise mittels Druckluft in eine Bereitstellungsposition geschoben werden. Alternativ ist die Zuführeinheit nach Art eines Greifers ausgebildet, beispielsweise als ein mechanischer Greifer oder auch als ein insbesondere als Vakuumhülse ausgebildeter Vakuumgreifer. Mittels des Greifers wird die jeweilige Schraube aus einer Bereitstellungsposition, beispielsweise einem Magazin gegriffen. Die Zuführeinheit der Schraubvorrichtung ist typischerweise Teil eines Zuführsystems, welches je nach Ausgestaltung z.B. einen Vorratsbehälter für die Schrauben, ein Magazin, eine Vakuum-Anlage, eine DruckluftAnlage, einen Einschussschlauch etc. aufweist.

Weiter weist die Vorrichtung zumindest im Betrieb ein Schraubwerkzeug auf, welches zum Greifen eines Schraubenkopfes, insbesondere zum Eingreifen in den Schraubenkopf der Schraube ausgebildet ist. Beim Schraubwerkzeug kann es sich um ein Innenkant-Werkzeug oder um ein Außenkant-Werkzeug handeln. Das Schraubwerkzeug ist mithilfe der Dreheinheit rotierbar und mithilfe der Vorschubeinheit in Axialrichtung insbesondere relativ zum Werkzeugkopf verschiebbar.

Weiterhin umfasst die Schraubvorrichtung eine Steuervorrichtung zur Steuerung des Schraubvorgangs. Die Steuervorrichtung ist dabei derart ausgelegt, dass die Steuerung des Vorschubanteils des Schraubvorgangs anhand der momentanen Vorschubkraft und zwar insbesondere positionsabhängig erfolgt. Speziell erfolgt die Steuerung des Zustellanteils, bei dem eine reine Zustellbewegung ohne überlagerte Drehbewegung erfolgt, anhand der momentanen Vorschubkraft und speziell in Abhängigkeit der momentanen Position. Es wird also die momentane Vorschubkraft insbesondere in Abhängigkeit der aktuellen Axialposition erfasst und die Steuerung des Vorschubanteils des Schraubvorgangs, und damit auch die Steuerung der Vorschubeinheit und/oder der Dreheinheit erfolgt auch oder teilweise ausschließlich anhand dieser momentanen Vorschubkraft. Bevorzugt erfolgt die Steuerung der Vorschubeinheit und/oder der Dreheinheit anhand der momentanen Vorschubkraft auch bereits während des Zustellanteils.

Alternativ oder ergänzend zu der Steuerung anhand der momentanen Vorschubkraft ist eine gemeinsame, abgestimmte Steuerung zumindest zwei der drei Einheiten (Vorschubeinheit, Dreheinheit, Zuführeinheit) ausgebildet. Hierzu erfolgt eine interaktive Steuerung der einen Einheit in Abhängigkeit von momentanen Zustandswerten der anderen Einheiten.

Gemäß einer ersten Variante erfolgt die Steuerung der Dreheinheit und/oder der Zuführeinheit in Abhängigkeit der momentanen Axialposition der Vorschubeinheit. Alternativ oder ergänzend erfolgt die Steuerung der Dreheinheit in Abhängigkeit der momentanen Vorschubkraft der Vorschubeinheit. Weiterhin ergänzend oder alternativ erfolgt die Steuerung der Vorschubeinheit in Abhängigkeit der momentanen Messwerte (Zustandswerte) der Dreheinheit.

Weiterhin alternativ oder in Kombination erfolgt die Steuerung einer oder mehrerer der Einheiten (Vorschubeinheit, Dreheinheit, Zustelleinheit) in Abhängigkeit von abgeschlossenen Prozessschritten. Ein jeweiliger Schraubvorgang ist durch einen Zyklus gebildet, welcher sich allgemein untergliedern lässt in die Abfolge von mehreren Prozessschritten. Dies sind insbesondere:
- Zuführen der Schraube in eine Bereitstellungsposition im Werkzeugkopf mit Hilfe der Zuführeinheit bei Bedarf Positionieren der Schraubvorrichtung zum Bauteil mittels einer Verstellmechanik, an der die Schraubvorrichtung befestigt ist, z.B. ein Roboter oder eine mehrachsiges lineares Verstellsystem
- Zustellen des Schraubwerkzeugs aus einer Ausgangsposition bis zum Eingriff mit dem Schraubenkopf (zum Zustellanteil gehörig)
- gegebenenfalls weiteres Zustellen der Schraube bis zum Werkstück mittels Vorschub der Vorschubeinheit (zum Zustellanteil gehörig)
- Eindrehen der Schraube in das Werkstück (Schraubprozess)
- Rückhub der Vorschubeinheit insbesondere bis zur Ausgangsposition (zum (negativen) Zustellanteil gehörig).

Der Prozessschritt des Eindrehens der Schraube (eigentlicher Schraubprozess) ist typischerweise wiederum untergliedert in mehrere Teilschritte, nämlich Beginn des Eindrehens, ggf. mit Gewindeschneiden, weiteres Eindrehen und Endanzug (Festziehen) der Schraube.

Dieser Eindreh-Vorgang, der eigentliche Schraubvorgang, wird in an sich bekannter Weise gesteuert, beispielsweise drehmomentgesteuert.

Diesem Steuerungskonzept liegt allgemein die Erkenntnis zugrunde, dass bei einem elektrischen Vorschubantrieb typischerweise die momentanen axialen Positionsinformationen exakt und unmittelbar zur Verfügung stehen, insbesondere auch in Kombination mit weiteren momentanen Zustandswerten, sodass der momentane Zustand des Schraubvorgangs sehr exakt bestimmbar ist. Hiervon abgeleitet erfolgt eine definierte und zielgerichtete Steuerung in Abhängigkeit der momentanen Werte der Dreheinheit und/oder der Vorschubeinheit. Im Unterschied hierzu sind genaue, verlässliche momentane Positionsangaben insbesondere auch in Kombination mit weiteren momentanen Zustandswerten beispielsweise zur Vorschubgeschwindigkeit und Position bei pneumatischen Antrieben nicht verfügbar.

Bevorzugt wird die Vorschubkraft kontinuierlich über den gesamten Schraubvorgang hinweg überwacht und insbesondere auch in Abhängigkeit der momentanen Vorschub-Position erfasst und ausgewertet. In bevorzugter Ausgestaltung erfolgt daher über den gesamten Hubbereich der Vorschubeinheit eine kontinuierliche Erfassung sowohl der momentanen Vorschubkraft als auch die momentane axiale Position des in Axialrichtung zu verstellenden Vorschubteils. Der Hubbereich der Vorschubeinheit setzt sich also zusammen aus dem Hubanteil für den Zustellanteil sowie dem Hubanteil beim eigentlichen Eindrehvorgang / Schraubprozess.

Anhand dieser kombinierten Information, nämlich Position und Vorschubkraft erkennt die Steuerung bevorzugt auch auf Fehler beim Schraubvorgang, beispielsweise wird auf folgende Fehler erkannt:
- Fehlende oder fehlerhafte Teile, insbesondere Werkstück und / oder Schraube
- bestehende Störkonturen z.B. von Gegenständen,
- Kollision mit einem Gegenstand.

Alle diese Fehlerquellen werden vorzugsweise bereits während des Zustellanteils erkannt, also vor dem eigentlichem Schraubprozess.

Diese Fehlererkennung ergibt sich aus der positionsabhängigen Auswertung der Vorschubkraft. Erhöht sich die Vorschubkraft an einer Position, an der dies nicht erwartet ist, so liegt beispielsweise eine Störkontur oder eine Kollision vor oder die Schraube ist fehlerhaft, z.B. zu lang, zu schwergängig etc. Eine Schwergängigkeit wird während des eigentlichen Schraubprozesses erkannt. Fehlt es wider Erwarten an einer Erhöhung der Vorschubkraft, so deutet dies z.B. auf ein fehlendes Teil hin. Falls ein Fehler identifiziert wird, erfolgt ein steuertechnischer Eingriff in die Ansteuerung der Vorschubeinheit und/oder der Dreheinheit insbesondere in Abhängigkeit Vorschubkraft und/oder der Axialposition.

In bevorzugter Ausgestaltung ist die Steuereinrichtung für unterschiedliche Arten von Schraubvorgängen parametrierbar, d. h. vom Bediener frei einstellbar. Unter unterschiedliche Arten von Schraubvorgängen wird hierbei verstanden, dass die Schraubvorgänge sich im Hinblick auf die Schraubpartner (Werkstück und/oder Schraube) unterscheiden und/oder dass die Schraubvorgänge sich im Hinblick auf die Schraubparameter unterscheiden. Schaubparameter sind beispielsweise die Drehgeschwindigkeit beim Schraubvorgang, ein Anzugs-Drehmoment etc. Dabei ist für den (Gesamt-) Hubbereich für eine jeweilige Art des Schraubvorgangs ein individuelles Geschwindigkeitsprofil vorgeben, welches für unterschiedliche Hubabschnitte unterschiedliche Geschwindigkeiten für die Vorschubbewegung aufweist. Die Vorschubeinheit wird entsprechend dem individuellen Geschwindigkeitsprofil angesteuert. Dabei wird gleichzeitig positionsabhängig die momentane Vorschubkraft erfasst und überwacht. Unter Überwachung wird vorliegend regelmäßig auch eine Begrenzung der Vorschubkraft verstanden. Alternativ oder ergänzend erfolgt im Falle einer Abweichung von einem vorgegebenen Sollwert eine Regelung auf den Sollwert.

Allgemein werden definierte positionsabhängige Umschaltpositionen zielgerichtet und zügig bei hoher Prozesssicherheit angesteuert, so dass kurze Zykluszeiten erreicht werden. Unter Umschaltpositionen werden insbesondere solche (axialen) Positionen verstanden, bei denen ein Umschalten der Schraubparameter, wie z.B. eine Änderung der Vorschubwerte, der Drehwerte oder der Parameter für die Zuführeinheit erfolgt. Speziell wird unter Umschaltposition ein Umschalten verstanden, bei dem aufgrund des Erreichens einer definierten axialen Position der Vorschubeinheit ein Schaltsignal für eine der beiden anderen Einheiten erfolgt. Durch die begleitende Überwachung der momentanen Vorschubkraft wird dabei der Umschaltpunkt definiert und die Umschaltposition zuverlässig erkannt. So lässt sich z.B. das Schraubwerkzeug aus einer Ausgangsposition zügig in Richtung zu einer Zwischenposition (Axialposition) verfahren, in der ein Eingriff mit dem Schraubenkopf erfolgt. Kurz vor Erreichen der Zielposition wird von einer hohen Vorschubgeschwindigkeit auf eine niedrige Vorschubgeschwindigkeit umgestellt und anschließend wir der korrekte Eingriff in Abhängigkeit der Vorschubkraft (erwarteter Anstieg) erfasst. Bei korrektem Eingriff ist eine definierte Umschaltposition gegeben. Bei dieser Zwischenposition handelt es sich insbesondere auch um eine Zwischenposition innerhalb des Zustellanteils, d.h. nach Erreichen der Zwischenposition und dem Eingriff des Schraubwerkzeugs erfolgt noch eine weitere axiale Zustellbewegung mit der Vorschubeinheit, bevor die Schraube den Schraubpartner erreicht und der eigentlichen Schraubprozess mit dem Eindrehen erfolgt.

Alternativ handelt es sich bei dieser Zwischenposition auch bereits um eine Position, bei der die Schraube bereits auf dem Schraubpartner aufsitzt.

Nach dem korrekten Eingriff des Schraubwerkzeugs wird z.B. die Rotation des Schraubwerkzeugs gestartet.

Allgemein wird hierbei also beispielsweise zunächst positionsgesteuert zu einer Zwischenposition verfahren, dann erfolgt ein Umschalten (insbesondere Reduzierung) der Vorschubgeschwindigkeit bei gleichzeitiger Aktivierung der Kraftüberwachung und anschließend ein Umschalten zu einem nachfolgenden Prozessschritt, beispielsweise ein Starten des Drehantriebs.

Bei einer Überschreitung oder Unterschreitung von vorgegebenen Vorschubkraft-Grenzwerten sind vorzugsweise Umschaltpunkte definiert, an denen die Vorschubgeschwindigkeit und/oder die Drehgeschwindigkeit oder auch die Richtung dieser Bewegungen verändert werden. Bevorzugt werden positionsabhängig bestimmte Aktionen ausgelöst, wie beispielsweise eine oder mehrere der folgenden Aktionen
- der Start der Drehbewegung des Drehantriebs zum Einschrauben,
- Weiterdrehen des Schraubwerkzeugs um einen bestimmten Wert,
- geringfügiges Zurücksetzen der Vorschubeinheit mit anschließendem Vorhub etc. Der besondere Vorteil ist darin zu sehen, dass Umschaltpositionen schnell und hochgenau angefahren werden können.

Speziell ist vorgesehen, dass in Abhängigkeit der erfassten momentanen Vorschubkraft und der momentanen Position die Dreheinheit angesteuert wird. Die erfasste Vorschubkraft definiert daher einen Umschaltpunkt für den Drehantrieb.

Bevorzugt werden mehrere Axialpositionen mit unterschiedlichen Vorschubgeschwindigkeiten bei gleichzeitiger Überwachung der Vorschubkraft angefahren. In Abhängigkeit der momentanen Axialposition und der momentanen Vorschubkraft sind mehrere Umschaltpunkte definiert, in deren Abhängigkeit Änderungen in der Ansteuerung der Vorschubeinheit und/oder der Dreheinheit vorgenommen werden.

So ist z.B. bei Unterfluranwendung, bei denen eine Zuführung der Schraube von unten erfolgt, erforderlich, dass die Schraube gegen ein Zurückfallen gesichert wird. Hierzu ist vorzugsweise vorgesehen, dass die Vorschubeinheit bis zu einer Zwischenposition verfährt und einen sogenannten Sperrhub ausführt. In der Zwischenposition sperrt die Vorschubeinheit, insbesondere das Schraubwerkzeug ein Zurückfallen der Schraube, indem beispielsweise eine Mündungsöffnung eines Zuführkanals durch das Schraubwerkzeug verschlossen wird. Nachfolgend oder auch zuvor können weitere axiale Positionen angefahren werden, an denen bestimmte Umschaltpunkte definiert sind.

Der besondere Vorteil hierbei ist darin zu sehen, dass innerhalb des gesamten Hubes und vorzugsweise bereits auch innerhalb des Zustellanteils mehrere Axialpositionen definiert werden, die mit unterschiedlichen Geschwindigkeiten angefahren werden. Dadurch ist ein hochgenaues und schnelles Anfahren von beliebigen Positionen in beliebiger Anzahl innerhalb des Gesamthubes insbesondere bei gleichzeitiger Kraftüberwachung ermöglicht und vorgesehen. Speziell werden zumindest zwei vorzugsweise mehr als zwei, weiter vorzugsweise mehr als 3 oder mehr als 4 unterschiedliche Axialpositionen mit unterschiedlichen Geschwindigkeiten angefahren.

Im Vergleich zu einem herkömmlichen pneumatischen Antrieb wird hierdurch eine Vielzahl von Vorteilen erreicht. So ist ein wichtiger Prozessschritt beim Schraubvorgang das zuverlässige Greifen (Eingreifen oder Umgreifen) des Schraubenkopfes durch das Schraubwerkzeug. Bei einem herkömmlichen pneumatischen Antrieb ist regelmäßig ein Dämpfer zum Abbremsen der Vorschubbewegung erforderlich, wenn das Werkzeug auf die Schraube auftrifft. Ein derartiger Dämpfer ist dafür nicht vorgesehen und nicht erforderlich. Vielmehr wird die genaue Axialposition durch den elektrischen Vorschubantrieb genau vorgegeben und eingenommen.

Die zuvor beschriebenen Umschaltpositionen und Umschaltpunkte betreffen vorzugsweise Prozessschritte des Schraubvorgangs außerhalb des eigentlichen Eindrehens der Schraube in den Schraubpartner, insbesondere betreffen diese Umschaltpositionen spezielle axiale Positionen innerhalb des Zustellanteils und damit innerhalb einer Hubbewegung der Vorschubeinheit vor dem Eindrehen oder nach dem Eindrehen der Schraube in den Schraubpartner.

Bisher war es ohne aufwändige Sensorik nicht möglich, einen korrekten Eingriff des Schraubwerkzeugs am Schraubenkopf bereits bei Beginn des Eindrehvorganges zu gewährleisten. Durch die erfindungsgemäß vorgesehene Kraftüberwachung beim Anfahren der exakten, vordefinierten Eingriffsposition wird nunmehr eine definierte Überwachung erzielt, ob ein korrekter Eingriff des Werkzeugs mit dem Schraubenkopf vorliegt. Ein nicht korrekter Eingriff liegt beispielsweise vor, wenn der Schraubenkopf und das Werkzeug in einer falschen relativen Drehposition zueinander angeordnet sind. Bevorzugt wird die Schraube an einer vorgegebenen Axialposition beispielsweise durch Halteelemente im Werkzeugkopf gehalten. Der Steuerung ist daher bekannt, bis zu welcher Axialposition das Werkzeug verfahren kann/muss, um in korrektem Eingriff mit dem Schraubenkopf zu sein. Wird diese Position erreicht, liegt das Schraubwerkzeug speziell bei einem Innenkant-Werkzeug im Inneren des Schraubenkopfes an einer definierten axialen Eingriffsposition an. Bis zum Erreichen der axialen Eingriffsposition erfolgt in der Regel kein nennenswerter Kraftanstieg. Im Falle eines unsachgemäßen Eingriffs lässt sich dieser beispielsweise anhand eines frühzeitigen Kraftanstiegs erkennen. In einem solchen Fall werden spezielle Maßnahmen ergriffen, wie weiter unten noch detaillierter erläutert wird.

Durch diese Maßnahme ist insbesondere ein verschleißfreies Eingreifen des Werkzeugs in den Schraubenkopf gewährleistet. Bei bisherigen Schraubvorgängen erfolgt der korrekte Eingriff häufig erst mit dem Beginn des Schraubprozesses, bei dem i.d.R eine hohe axiale Vorschubkraft auf die Schraube ausgeübt wird. Sofern das Schraubwerkzeug nicht bereits im korrekten Eingriff ist, führt dies zu einer Relativdrehung zwischen Werkzeug und Schraubenkopf. Durch die hier beschriebene Maßnahme wird daher ein Abrieb am Werkzeug und / oder insbesondere auch am Schraubenkopf vermieden. Ein derartiger Abrieb kann zu einer Verschmutzung der Bauteile führen und deren Funktion beeinträchtigen. Dies ist insbesondere bei elektronischen Bauteilen, wie z.B. Leiterplatten von besonderer Bedeutung. Insbesondere bei sichtbaren Schrauben wird hierdurch auch eine optische Beeinträchtigung des Schraubenkopfes zuverlässig vermieden.

Gemäß einer bevorzugter Ausgestaltung umfasst die Zuführeinheit einen Zuführkanal, beispielsweise einen Einschusskanal und einen Schlauch, über den eine jeweilige Schraube mithilfe von Druckluft in die Bereitstellungsposition befördert wird.

Die Steuervorrichtung ist derart ausgebildet, dass nach einem - insbesondere Druckluft-betätigten - Zuführen einer jeweiligen Schraube in die Bereitstellungsposition die Vorschubeinheit an eine Zwischenposition verfährt, in der das Schraubwerkzeug den Schraubenkopf greift und dort in dieser Zwischenposition bis zu einem Freigabesignal verharrt. In dieser Zwischenposition erfolgt bereits ein korrekter Eingriff des Schraubwerkzeugs in den Schraubenkopf, wie dies zuvor beschrieben wurde. Durch diese Maßnahme ist sichergestellt, dass bereits bei Beginn des nachfolgenden Einschraubens der Schraube, bei dem die Rotationsbewegung gestartet wird, das Schraubwerkzeug im korrekten Eingriff ist. Bei herkömmlichen Antrieben bestand hier die Gefahr, dass der korrekte Eingriff nicht oder erst im Laufe des Schraubvorgangs erreicht wurde, was jedoch häufig zu einem gewissen Abrieb führte, welcher für den gesamten Schraubvorgang nachteilig ist und insbesondere zu Verschmutzungen bzw. Verschleiß führen konnte.

Alternativ oder ergänzend zum korrekten Eingriff des Schraubwerkzeuges in der Zwischenposition ist vorgesehen, dass nach Erreichen der Zwischenposition die Zufuhr von Druckluft unterbrochen wird. Dies bedeutet, dass die Druckluftzufuhr in Abhängigkeit der Axialposition der Vorschubeinheit gesteuert wird. Hierdurch lässt sich die erforderliche Menge an Druckluft oder allgemein eines Betriebsgases verringern. Die Schraube kann bis zum Freigabe-Signal z.B. für den Prozessschritt des Eindrehens in das Werkstück in der Zwischenposition geparkt sein. Während dieser Zeitdauer wird keine Druckluft verbraucht.

Bevorzugt ist die Schraubvorrichtung derart ausgebildet, dass bei Erreichen der Zwischenposition ein Rückfallen der jeweiligen Schraube aus der Bereitstellungsposition beispielsweise in eine Schlauchmündung verhindert wird. Hierzu ist beispielsweise ein Halten der Schraube in der Zwischenposition, beispielsweise durch mechanische Klemmbacken vorgesehen.

In bevorzugter Ausgestaltung ist vorgesehen, dass das Schraubwerkzeug in der Zwischenposition eine Mündungsstelle des Zuführkanals sperrt, d. h. das Werkzeug befindet sich vor einer Mündungsstelle, solange sich das Werkzeug in dieser Zwischenposition befindet.

Wie zuvor erläutert, wird erfindungsgemäß anhand der momentanen Vorschubkraft und der momentanen Axialposition überprüft, ob das Schraubwerkzeug in korrektem Eingriff mit dem Schraubenkopf ist.

Gemäß einer bevorzugten Ausgestaltung ist die Steuervorrichtung vorzugsweise dahingehend parametrierbar, dass für unterschiedliche Arten von Schraubvorgängen jeweils individuelle Kraftprofile vorgegeben werden können, wobei innerhalb des jeweiligen individuellen Kraftprofils für unterschiedliche Hubabschnitte unterschiedliche Vorschubkräfte festgelegt und definiert sind. Der Vorschub wird anhand des hinterlegten individuellen Kraftprofils gesteuert. Dabei wird insbesondere positionsabhängig die momentane Vorschubgeschwindigkeit sowie insbesondere auch deren Richtung erfasst und überwacht, also beispielsweise begrenzt oder auf einen Sollwert geregelt.

Die momentane Vorschubkraft wird allgemein beispielsweise aktiv mithilfe einer Messeinheit, beispielsweise eine Kraftmessdose erfasst. Alternativ wird die momentane Vorschubkraft durch eine Auswertung von Kenngrößen des elektrischen Vorschubmotors, speziell durch Auswertung des momentanen Motorstroms ermittelt.

Der Vorteil dieser Kraftsteuerung ist darin zu sehen, dass über den gesamten Hub ein definierter Kraftverlauf vorgegeben und überwacht wird. Im Unterschied zu herkömmlichen Druckluftsystemen, bei denen die Vorschubkraft im Wesentlichen durch Federelemente oder den Betriebsdruck von Druckluftzylindern bestimmt wurde, ist ein individuell parametrierbarer Kraftverlauf über den Hubbereich ermöglicht.

In bevorzugter Ausgestaltung wird insbesondere der Einfluss der Gravitation bei einem vorgegebenen Kraftprofil berücksichtigt bzw. kompensiert. Speziell ist dies auch bei den unterschiedlichen Kraftprofilen für unterschiedliche Schraubvorgänge vorgesehen. Hierzu wird die Vorschubrichtung und damit die Orientierung des Schraubwerkzeugs bezüglich der Richtung der Gravitationskraft berücksichtigt. Es wird also speziell ermittelt, unter welcher Orientierung die Vorschubbewegung erfolgt. In Abhängigkeit dieser Bewegungsrichtung (in Richtung der Gravitationskraft, entgegen der Gravitationskraft, unter einem Winkel bezüglich der Gravitationskraft) werden daher unterschiedliche Vorgaben für die Vorschubkraft, die von der Vorschubeinheit aufgebracht werden muss, festgelegt und eingestellt.

Die Orientierung der Schraubvorrichtung im Raum und damit die Richtung der Vorschubkraft ist beispielsweise für einen jeweiligen Schraubvorgang in einer übergeordneten Steuerung, beispielsweise in einer Robotersteuerung hinterlegt. Alternativ wird diese Orientierung während des Schraubvorgangs durch eine Messeinheit ermittelt und ein für einen definierten Hubabschnitt vorgegebener Kraftverlauf wird angepasst. Der vorgegebene Kraftverlauf charakterisiert dabei den gewünschten Kraftverlauf bei einem Prozessschritt, wie z.B. dem Eindrehen oder dem Zustellen. Werden beispielsweise mehrere Schrauben in ein komplexes Werkstück, wie z.B. ein Automobil-Bauteil mit unterschiedlichen Orientierungen eingeschraubt, so wird das Kraftprofil für eine jeweilige Schraube in Abhängigkeit ihrer Orientierung angepasst.

Durch die Vorgabe von unterschiedlichen Vorschubkräften für unterschiedliche Hubabschnitte wird insgesamt die Qualität des Schraubvorgangs erhöht. So wird beispielsweise im Falle einer gewindeformenden Schraube am Anfang des Schraubvorgangs bei einem Gewindeschneiden eine hohe Vorschubkraft ausgeübt. Nach Beendigung des Gewindeschneidvorgangs wird auf eine geringere Vorschubkraft während des Eindrehens umgeschaltet, bevor dann wieder bei einem sogenannten Endanzug auf eine höhere Vorschubkraft umgeschaltet wird.

Neben einem oder mehreren Kraftprofilen für ein Einschrauben der Schraube ist vorzugsweise weiterhin ein Kraftprofil für ein Herausdrehen der Schraube hinterlegt. Hierbei ist vorgesehen, dass ein Rückhub entsprechend des vorgegebenen Kraftprofils gesteuert wird. Dies bedeutet, dass die Rückwärtsbewegung in Abhängigkeit der momentanen auf die Vorschubeinheit einwirkenden Kraft (negative Vorschubkraft) gesteuert wird. Beim Herausdrehen der Schraube wird diese aufgrund des Gewindes automatisch entgegen der Axialrichtung nach hinten versetzt. Hierbei wird von der Schraube eine gewisse Kraft auf das Schraubwerkzeug ausgeübt. Der Rückhub wird nunmehr derart gesteuert, dass diese Kraft innerhalb eines vorgegebenen Kraftfensters ist. Damit ist gewährleistet, dass während des Rückhubs ein zuverlässiger Eingriff des Schraubwerkzeugs beibehalten bleibt.

Für die zuvor beschriebene Berücksichtigung der Gravitationskraft wird allgemein die Masse der Schraubvorrichtung, speziell die Masse der mit der Vorschubeinheit bewegten Teile berücksichtigt. In bevorzugter Ausgestaltung ist die Steuervorrichtung weiterhin derart ausgebildet, dass eine Masse für eine Anbaukomponente eingebbar ist, und dass eine momentane Orientierung des Werkzeugkopfes erfassbar ist. Dies Masse der Anbaukomponente wird unter Berücksichtigung der Orientierung für das vorgegebene Kraftprofil berücksichtigt. Dieses wird daher wiederum angepasst. Bei der Anbaukomponente handelt es sich beispielsweise um das (austauschbare) Schraubwerkzeug.

Diese Ausgestaltung beruht auf der Überlegung, dass häufig spezielle Anbaukomponenten kundenseitig eingesetzt werden, die also nicht von dem Hersteller der Schraubvorrichtung stammen bzw. dass eine jeweilige Schraubvorrichtung über derartige Anbauelemente individuell konfigurierbar ist. Diese Anbauteile haben maßgeblichen Einfluss auf die beim Schraubvorgang auftretenden Kräfte. Die Steuervorrichtung ist nunmehr derart konzipiert, dass durch die Eingabe der Masse derartige unterschiedliche Anbaukomponenten berücksichtigt werden können. Die Steuervorrichtung ist daher auch bezüglich der Masse von dem Endnutzer frei konfigurierbar. Die hinterlegten Kraftprofile werden daher anhand der eingegebenen Masse für ein jeweiliges Bauteil angepasst. Die momentane Orientierung wird dabei wiederum entweder über eine Messeinheit gemessen oder aus einer übergeordneten Steuerung abgeleitet.

In Einzelfällen weist die Schraubvorrichtung mehrere Dreheinheiten und mehrere Vorschubeinheiten auf, wobei die Hubbewegungen der Vorschubeinheiten miteinander synchronisiert werden. Es erfolgt hierbei eine gezielte Abstimmung der Vorschubbewegungen der Vorschubeinheiten beim Einsatz mehrerer Dreheinheiten. Die Abstimmung erfolgt hierbei insbesondere über eine übergeordnete Steuervorrichtung. Die beispielsweise zwei Vorschubeinheiten werden daher insbesondere wegabhängig synchronisiert. Diese Ausgestaltung hat den besonderen Vorteil, ein gleichzeitiges Verschrauben mehrerer Schrauben zu ermöglichen, sodass ein gleichmäßiges Anziehen erfolgt. Eine derartige synchronisierte Vorschubbewegung dient beispielsweise zum Verbinden zweier Bauteile, speziell zweier Halbschellen, da in diesem Fall durch den gesteuerten Vorschub gewährleistet wird, dass keine zusätzlichen Querkräfte auf die Schrauben aufgebracht werden, dass also die beiden Bauteile gleichmäßig und parallel gegeneinander verschraubt werden.

In zweckdienlicher Weiterbildung erfolgt ein jeweiliger Schraubvorgang innerhalb eines (Arbeits-) Zyklus, bei dem die Zuführeinheit, die Vorschubeinheit sowie die Dreheinheit jeweils mehrere Prozessschritte zyklisch ausführen. Jede dieser Einheiten führt daher einen individuellen Prozesszyklus mit typischerweise mehreren Prozessschritten aus. So werden typischerweise die Drehbewegung der Dreheinheit, die Vorschubbewegung der Vorschubeinheit sowie das Zuführen über die Zuführeinheit in unterschiedliche Schritte während des Schraubvorgangs unterteilt. Diese individuellen Prozessschritte der Dreheinheit und / oder der Zuführeinheit werden durch die Steuervorrichtung in Abhängigkeit der momentanen Axialposition und/oder der momentanen Vorschubkraft der Vorschubeinheit angesteuert. Bei der Steuervorrichtung handelt sich dabei beispielsweise um eine übergeordnete Steuervorrichtung, welche also die einzelnen Prozesszyklen dieser verschiedenen Einheiten miteinander koordiniert und abstimmt. Es erfolgt insofern eine Interaktion zwischen den Einzelprozessen der Zuführeinheit, der Vorschubeinheit und der Dreheinheit.

Bisher war es in der Regel so, dass das Auslösen von speziellen Prozessschritten über eine Zeitsteuerung erfolgte. Hierzu wurde beispielsweise die Dreheinheit zur Ausführung einer Drehbewegung von der übergeordneten Steuervorrichtung nach einer bestimmten Zeit angesteuert, nachdem die Vorschubeinheit ein entsprechendes Steuersignal erhalten hatte. Von diesem zeitgesteuerten Auslösen wird nunmehr auf ein ereignisgesteuertes Auslösen umgestellt. Hierdurch ist zum einen eine kürzere Zykluszeit für den Schraubvorgang ermöglicht und zum anderen wird hierdurch auch die Störanfälligkeit reduziert.

So wird beispielsweise ein Prozessgas, beispielsweise Druckluft für das Einschie-ßen der Schrauben oder auch ein Vakuum für eine eventuell eingesetzte Vakuumhülse in Abhängigkeit der aktuellen Position der Vorschubeinheit zu- und/oder abgeschaltet.

Ein weiteres Beispiel ist der korrekte Eingriff des Schraubwerkzeugs in den Schraubenkopf. Sobald die korrekte Eingriffsposition erreicht ist, wird der Drehantrieb in geeigneter Weise angesteuert.

Für das zuverlässige Auffinden eines korrekten Eingriffs wird vorzugsweise wie folgt vorgegangen: Zunächst wird das Schraubwerkzeug in Axialrichtung zugestellt und zwar in einer ersten Variante bei fester Drehstellung (Schraubwerkzeug dreht nicht). Alternativ rotiert das Schraubwerkzeug bereits bei der Zustellbewegung, insbesondere mit geringer Drehgeschwindigkeit.

Es wird anhand der momentanen Daten zur Position und Vorschubkraft überprüft, ob ein korrekter Eingriff vorliegt, im Falle eines nicht korrekten Eingriffs wird der Drehantrieb und/oder die Vorschubeinheit geändert angesteuert. Speziell ist hierbei - insbesondere bei der Variante mit der festen Drehstellung des Schraubwerkzeugs - vorgesehen, dass beispielsweise ein geringfügiger Rückhub und/oder ein geringfügiges Weiterdrehen des Drehantriebs um einen definierten Drehwinkel, von beispielsweise 15°, 30° oder 45° erfolgt, bevor dann ein erneuter Vorschub erfolgt, begleitet von der Überwachung der Position und Vorschubkraft, bis ein korrekter Eingriff erfolgt ist. Dieser Vorgang wird bei Bedarf solange wiederholt, bis das Schraubwerkzeug zuverlässig im korrekten Eingriff mit dem Schraubenkopf ist.

Speziell bei der zweiten Variante mit der Rotation des Schraubwerkzeugs bei der Zustellbewegung rotiert - wenn eine erhöhte Vorschubkraft an einer Zustell-Position vor dem korrekten Eingriff und damit ein fehlerhafter Eingriff erfasst wird -das Schraubwerkzeug bei einer definierten (begrenzten) Vorschubkraft weiter, bis die korrekte Drehposition für den korrekten Eingriff erreicht ist, so dass dann das Schraubwerkzeug in die Werkzeugaufnahme vollständig eintaucht. Bei dieser Variante wird vorzugsweise bei Erfassung eines nicht korrekten Eingriffs oder ggf. auch in Abhängigkeit einer Axialposition vor dem Auftreffen auf der Schraube eine Begrenzung der Vorschubkraft aktiviert, um zu vermeiden, dass bei der Relativdrehung bis zur korrekten Drehposition der Schraubenkopf beschädigt wird.

Auf einen korrekten Eingriff wird erkannt, wenn bis zu einer definierten Axialposition (die der Position entspricht, bei der das Schraubwerkzeug vollständig in die Werkzeugaufnahme eintaucht) die Vorschubkraft einen bestimmten Grenzwert nicht überschreitet. Auf einen nicht korrekten Eingriff wird erkannt, wenn bereits vor dieser definierten Axialposition, und zwar insbesondere in einem Bereich der einer Tiefe der Werkzeugaufnahme der Schraube entspricht, eine Erhöhung der Vorschubkraft erfasst wird.

Gemäß einer bevorzugten Ausgestaltung ist die Steuervorrichtung weiterhin zur Erkennung eines Verschleißes der Vorschubeinheit ausgebildet. Hierzu werden während einer zyklisch wiederkehrenden Hubbewegung mit gleichbleibenden Randbedingungen die auftretenden Kräfte erfasst und ausgewertet. Die Auftretenden Kräfte beim (positiven oder negativen) Vorschub werden unter gleichen Bedingungen ermittelt, so dass also nur die den Vorschub betreffenden Faktoren für die auftretenden Kräfte eingehen. Bei diesen auftretenden Kräften handelt sich entweder um Vorschubkräfte, speziell aber um Rückhub-Kräfte, also insbesondere die Kräfte, die erforderlich sind, um die Vorschubeinheit in eine Ausgangsposition zurückzubringen. Speziell wird für die zyklisch wiederkehrende Hubbewegung ein Rückhub in eine Ausgangsposition herangezogen. Bei diesem Rückhub treten nur Kräfte auf, die der Vorschubeinheit als solche zugeordnet sind und die unabhängig von den Kräften beim Eindrehen der Schraube sind. Anhand variierender Kräfte beim Rückhub kann dann auf einen Verschleiß, beispielsweise eine Schwergängigkeit, auf Verschmutzungen etc. zurückgeschlossen werden.

Gemäß einer bevorzugten Weiterbildung werden die momentane Vorschubgeschwindigkeit und die momentane Drehgeschwindigkeit derart miteinander synchronisiert, dass der Vorschub einer Axialbewegung entspricht, die sich ergibt aus einer vorgegebenen Steigung des Gewindes der Schraube und der momentanen Drehgeschwindigkeit.

Diese Ausgestaltung beruht auf der Überlegung, dass in speziellen Anwendungsfällen ein kraftgesteuerter Vorschub zu einer Beschädigung beispielsweise des Werkstücks führen kann. Dies gilt speziell bei weichen Werkstoffen oder bei mehrlagigen Werkstoffen, bei denen die einzelnen Lagen unterschiedliche Härten haben. Wird beispielsweise bei einem sehr weichen Werkstoff, wie beispielsweise einem schwammartigen Gewebe, der Schraubvorgang kraftgesteuert durchgeführt bzw. mit einer vorgegebenen Vorschubkraft durchgeführt, so besteht häufig die Gefahr, dass das Gewinde der Schraube durch das weiche Material hindurchgedrückt wird und kein Schraubvorgang erfolgt. Dies gilt speziell für gewindeschneidende Schrauben. Durch die hier vorgeschlagene Maßnahme wird erreicht, dass der Vorschub exakt korreliert ist mit der Gewindesteigung bei der momentanen Drehgeschwindigkeit. Insofern wird hier ein synchron abgestimmter Betrieb des Drehantriebs mit der Vorschubeinheit vorgenommen. Die erforderliche Gewindesteigung, die sich dann in dem im Material des Werkstücks eingeschnitten Gewinde widerspiegelt, wird daher unabhängig von der Materialbeschaffenheit eingehalten.

Ausführungsbeispiele der Erfindung werden nachfolgend anhand der Figuren näher erläutert.
- Fig. 1: eine Seitenansicht einer Schraubvorrichtung,
- Fig. 2 bis 4: jeweils eine ausschnittsweise Schnittansicht einer Schraubvorrichtung im Bereich eines Werkzeugkopfes mit einer Zuführeinheit in unterschiedlichen Arbeitsstellungen.

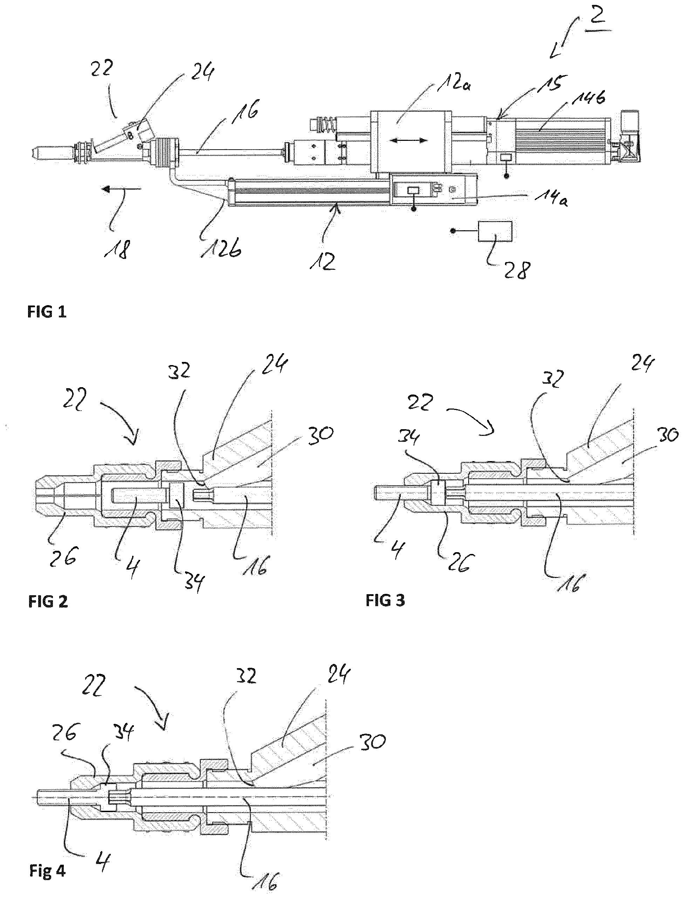

Eine in der Figur 1 beispielhaft dargestellte Schraubvorrichtung 2 dient zur automatischen Durchführung eines Schraubvorgangs, bei dem eine Schraube 4 (vgl. hierzu Fig. 2 bis 4) in einen Schraubpartner eingeschraubt wird. Bei dem Schraubpartner handelt es sich insbesondere um ein Werkstück, beispielsweise ein Bauteil für ein Kraftfahrzeug. Bevorzugt handelt es sich bei der Schraube 4 um eine gewindeformende Schraube 4, die also beim Einschrauben in das Werkstück das Gewinde selbst formt. Alternativ weist der Schraubpartner ein vorgefertigtes Gewinde auf, in das die Schraube eingeschraubt wird.

Die Schraubvorrichtung 2 weist eine Vorschubeinheit 12 mit einem elektrischen Vorschubantrieb 14a für die Vorschubbewegung auf. Weiterhin weist die Schraubvorrichtung eine Dreheinheit 15 mit einem weiteren elektrischen Antrieb 14b auf. Über die Dreheinheit wird ein Schraubwerkzeug 16 beim Schraubvorgang in eine Drehbewegung versetzt. Ergänzend wird das Schraubwerkzeug mittels der Vorschubeinheit 12 in und entgegen einer Axialrichtung 18 gesteuert verfahren. Bei dem Schraubwerkzeug 16 handelt es sich insbesondere um ein stangenförmiges Element, welches an seinem vorderen Ende ein Drehübertragungselement wie einen Schrauberbit oder einen Steckschlüssel trägt. Das Drehübertragungselement oder das gesamte Schraubwerkzeug 16 ist austauschbar gehalten.

Die Vorschubeinheit 12 weist einen verschieblichen Vorschubschlitten 12a sowie einen feststehenden Teil 12b auf. Der feststehende Teil 12b ist im Betrieb beispielsweise an einem Werkzeugträger oder einer Roboterhand einer Verstellmechanik, wie z.B. ein Industrieroboter befestigt. Bei dem automatisierten Schraubvorgang handelt es sich insbesondere um einen vollautomatisch gesteuerten Schraubvorgang. Bei diesem verfährt die Verstellmechanik mit der daran montierten Schraubvorrichtung an eine gewünschte Position. An dieser Position wird dann der eigentliche Schraubvorgang durchgeführt.

Der feststehende Teil 12b ist im dargestellten Ausführungsbeispiel seitlich neben der Dreheinheit 15 angeordnet. Die Dreheinheit 15 ist insgesamt am Vorschubschlitten 12a befestigt und verfährt mit diesem in und entgegen der Axialrichtung 18.

Am vorderen Ende des feststehenden Teils 12b, insbesondere an einem abgekröpft ausgebildeten Befestigungsflansch ist ein Werkzeugkopf 22 befestigt. Dieser weist im Ausführungsbeispiel eine Zuführeinheit 24 zur Zuführung der Schrauben 4 in eine Bereitstellungsposition auf. In der Bereitstellungsposition befindet sich die Schraube innerhalb eines beispielsweise hülsenförmigen Haltelements 26 (vgl. hierzu auch die Fig. 2 bis 4). Dieses weist an seinem vorderen Ende vorzugsweise Halteklauen auf, die die Schraube 4 definiert in einer Bereitstellungsposition halten. Die Halteklauen können gegen eine elastische, radiale Klemmkraft radial geöffnet werden, so dass beim Schraubvorgang die Schraube durch das Haltelement 26 hindurchtreten kann.

Die dargestellte Schraubvorrichtung 2 ist entweder als eine stationäre Anlage ausgebildet, der die zu verschraubenden Bauteile zugeführt werden. Bevorzugt ist die Schraubvorrichtung 2 jedoch als bewegliche Schraubvorrichtung 2 ausgebildet und beispielsweise an einem Roboter befestigt, mit dem sie an eine gewünschte Position verfahren wird.

Der Schraubvorgang erfolgt vollautomatisch, ohne dass eine Interaktion eines Benutzers wie beispielsweise das händische Führen der Schraubvorrichtung 2 oder auch ein Starten eines jeweiligen individuellen Schraubvorgangs erforderlich wäre. Die Schraubvorrichtung 2 und der Schraubvorgang werden mithilfe einer Steuervorrichtung 28 gesteuert. Diese weist typischerweise mehrere Funktionen auf, die in unterschiedlichen, auch örtlich getrennten Steuer- Baueinheiten oder in einer gemeinsamen Steuer-Baueinheit implementiert sind. Diese Steuer-Funktionen sind insbesondere die Steuerung der Rotationsbewegung des Schraubwerkzeugs 16 über die Dreheinheit 15, der Vorschubbewegung des Schraubwerkzeugs 16 über die Vorschubeinheit 12, die Zuführung der Schrauben 4 über die Zuführeinheit 24 sowie die Steuerung des Gesamtprozesses als übergeordnete Steuerungsfunktion.

Typischerweise weisen die einzelnen Einheiten 12, 15, 24 jeweils spezifische Steuerungen auf, die einzelne Funktionen der Einheiten 12,15,24 steuern. Hierbei handelt es sich beispielsweise um Motorsteuerungen der elektrischen Antriebe 14a, 14b. Bei den Antrieben 14a, 14b handelt es sich um elektrische Motoren, insbesondere um Rotationsmotoren oder auch um Linearmotoren. Bei Bedarf können Getriebeelemente vorgesehen sein, um die gewünschte Drehbewegung bzw. Vorschubbewegung zu erzeugen.

Diese einzelnen Steuerungen zählen vorliegend insgesamt zur gesamten Steuervorrichtung 28. Neben diesen einzelnen Steuerungen weist die Steuervorrichtung noch eine übergeordnete Steuereinheit auf, welche z.B. in einer Maschinensteuerung für die komplette Anlage integriert ist.

Während eines Schraubvorgangs werden kontinuierlich mit der Dreheinheit 15 momentane Drehwerte erfasst, nämlich zumindest eine momentane Drehzahl, ein momentanes Drehmoment sowie ein momentaner Drehwinkel. Über die Vorschubeinheit 12 werden ebenfalls kontinuierlich während des Schraubvorgangs momentane Vorschubwerte erfasst, nämlich eine momentane Vorschubkraft, eine momentane Vorschubgeschwindigkeit sowie eine momentanen Axialposition des Vorschubschlittens 12a.

Die einzelnen momentan erfassten Zustandswerte, insbesondere die momentanen Drehwerte und die momentanen Vorschubwerte werden entweder mithilfe von Messelementen gemessen oder indirekt ermittelt, z.B. über die Auswertung von momentanen Motorkenndaten der elektrischen Antriebsmotoren 14a, 14b. Diese Zustandswerte werden datentechnisch an die Steuervorrichtung 28 übermittelt und dort für die Steuerung des Schraubvorgangs verarbeitet.

Während des Schraubvorgangs wird dieser abhängig von der Axialposition des Vorschubschlittens 12a und damit abhängig von der Axialposition des Schraubwerkzeugs 16 und in Abhängigkeit der momentanen, positionsabhängigen Vorschubkraft gesteuert.

Alternativ oder zusätzlich erfolgt eine gemeinsame abgestimmte Steuerung zwischen der Dreheinheit 15 und der Vorschubeinheit 12 und/oder eine abgestimmte Steuerung zwischen der Zuführeinheit 24 und der Vorschubeinheit 12. Es erfolgt also insofern eine interaktive Steuerung zwischen zumindest zwei dieser Einheiten, wobei die übergeordnete Steuereinheit der Steuervorrichtung 28 die eine Einheit in Abhängigkeit der momentanen Zustandswerten der anderen Einheit ansteuert, wie dies zuvor im allgemeinen Beschreibungsteil beschrieben wurde.

Durch die Bereitstellung von elektrischen Antrieben 14a, 14b sind hierbei spezielle Steuervorgänge ermöglicht und umgesetzt, die zu einer verbesserten Steuerung des Schraubvorgangs führen.

Ein Beispiel für eine interaktive Steuerung der Zuführeinheit 24 in Abhängigkeit der momentanen axialen Position des Schraubwerkzeugs 16 wird beispielhaft im Zusammenhang mit den Figuren 2-4 näher erläutert. Die nur ausschnittsweise dargestellte Zuführeinheit 24 weist einen Zuführkanal 30 auf, welcher unter einem Winkel schräg zur Axialrichtung 18 orientiert ist. Eine jeweilige Schraube 4 wird über diesen Zuführkanal 30 mithilfe von Druckluft in eine Bereitstellungsposition zugeführt. Diese Bereitstellungsposition ist beispielsweise die in Fig. 2 gezeigte Position, bevorzugt jedoch die in Fig. 3 gezeigte Position, in der die Schraube 4 im vorderen Endbereich des Halteelements 26 anliegt und von diesem gehalten ist. Am Zuführkanal 30 ist hierzu typischerweise ein Schlauch angeschlossen, über den die Schrauben 4 zugeführt werden. In dieser Bereitstellungsposition befindet sich die Schraube 4 innerhalb des Werkzeugkopfes 22.

Nach dem Einschießen der Schraube 4 ergeht ein Steuersignal an die Vorschubeinheit 12, sodass das Schraubwerkzeug 16 in Axialrichtung 18 in eine Zwischenposition verfahren wird, wie sie beispielsweise in der Figur 2 dargestellt ist. In dieser Zwischenposition sperrt das Schraubwerkzeug 16 eine Mündungsöffnung 32 des Zuführkanals 30 und verhindert damit bereits ein Zurückfallen der Schraube 4 in den Zuführkanal 30. Dies ist beispielsweise bei Unterfluranwendungen notwendig. Auch die in den Figuren 3 und 4 dargestellten Positionen des Schraubwerkzeugs 16 definieren Zwischenpositionen, bei denen die Mündungsöffnung 32 gesperrt ist

Sobald das Schraubwerkzeug 16 die Zwischenposition erreicht hat, ergeht ein Steuersignal an die Zuführeinheit 24, worauf die Druckluft-Zufuhr unterbrochen wird, d.h. eine Druckluftzufuhr wird abgeschaltet, so dass keine Druckluft verbraucht wird.

Anhand der Figuren 3 und 4 wird der Prozessschritt des "Finden des korrekten Eingriffs" des Schraubwerkzeugs 16 in den Schraubenkopf 34 erläutert: Hierzu verfährt das Schraubwerkzeug 16 in Axialrichtung 18 nach vorne, wobei während dieses Verfahrens die Vorschubkraft in Abhängigkeit der Axialposition überwacht wird.

Sofern die Schraube 4 nicht bereits beim Einschießen in die in den Figuren 3 und 4 gezeigte Bereitstellungsposition gebracht wurde, wird Sie durch das Schraubwerkzeug 16 nach vorne verschoben. Die Bereitstellungsposition ist eine bekannte, definierte Axialposition, wie sie in der Figur 3 dargestellt ist. Das Schaubwerkzeug 16 fährt nach vorne und greift die Schraube 4, insbesondere taucht das Schraubwerkzeug 16 mit einem Kopf (Mehrkant-Schlüssel) in den Schraubenkopf 34 ein. Diese Position stellt eine (ggf. weitere) Zwischenposition dar, in der der korrekte Eingriff des Schraubwerkzeugs 16 erfolgt, bevor der eigentliche Schraubvorgang mit dem Eindrehen der Schraube 4 in das Werkstück erfolgt.

Bevorzugt erfolgt ein Freigabesignal zum Starten des eigentlichen Einschraubens und damit zum Starten des Eindrehens erst dann, wenn ein korrekter Eingriff sichergestellt ist.

In der Position gemäß der Figur 3 befindet sich das Schraubwerkzeug 16 noch nicht vollständig im Eingriff mit der Schraube 4. Dies wird erkannt, weil ein Kraftanstieg zu früh erfolgt, also nicht innerhalb eines Positionsfensters für einen ordnungsgemäßen Eingriff. Dies beruht beispielsweise darauf, dass das Schraubwerkzeug 16 und der Schraubenkopf 34 gegeneinander verdreht sind, so dass das Schraubwerkzeug 16 nicht in den Schraubenkopf 34 bis zu der vorgesehenen, definierten Axialposition eintauchen kann.

In einem solchen Fehler-Fall wird von der Steuervorrichtung 28 ein nicht-in Ordnung Zustand detektiert und es werden Maßnahmen ergriffen, um für einen ordnungsgemäßen Eingriff zu sorgen. Hierzu sind unterschiedliche Strategien möglich. Beispielsweise erfolgt ein geringfügiger Rückhub und/oder ein Verdrehen des Schraubwerkzeugs 16 um einige wenige Grad mit anschließendem erneuten Vorschub. Sobald die korrekte Drehposition vorliegt, taucht das Schraubwerkzeug 16 in den Schraubenkopf 34 ein, bis ein Boden der Aufnahme des Schraubenkopfes 34 erreicht wird und ein Kraftanstieg erfolgt. Diese Situation ist in der Figur 4 angedeutet. Nunmehr erkennt die Steuervorrichtung 28, dass der Kraftanstieg an der definierten Axialposition erfolgt. Als nächstes wird dann beispielsweise ein Freigabesignal für den Drehantrieb 15 abgegeben.

### Bezugszeichenliste

- 2: Schraubvorrichtung.
- 4: Schraube
- 12: Vorschubeinheit
- 12a: Vorschubschlitten
- 12b: feststehender Teil
- 14a: elektrischer Vorschubantrieb für Vorschubbewegung
- 14b: elektrischer Antrieb für Rotationsbewegung
- 15: Dreheinheit
- 16: Schraubwerkzeug
- 18: Axialrichtung
- 20: Drehantrieb
- 22: Werkzeugkopf
- 24: Zuführeinheit
- 26: Halteelement
- 28: Steuervorrichtung
- 30: Zuführkanal
- 32: Mündungsöffnung
- 34: Schraubenkopf

## Patentansprüche

1. Schraubvorrichtung zur automatisierten Durchführung eines Schraubvorgangs, bei dem eine Schraube mit einem Schraubpartner in Axialrichtung verschraubt wird, wobei die Schraubvorrichtung aufweist
- eine Vorschubeinheit zur Erzeugung einer axialen Vorschubbewegung über einen Hubbereich, wobei die Vorschubeinheit einen elektrischen Vorschubmotor aufweist und zur Erfassung von momentanen Vorschubwerten ausgebildet ist, nämlich einer momentanen Vorschubkraft, einer momentanen Vorschubgeschwindigkeit sowie einer momentanen Axialposition
- eine Dreheinheit mit einem elektrischen Antriebsmotor zur Erzeugung einer Rotationsbewegung, wobei die Dreheinheit zur Erfassung von momentanen Drehwerten ausgebildet ist, nämlich zur Erfassung einer momentanen Drehzahl, eines momentanen Drehmoments sowie eines momentanen Drehwinkels
- einen Werkzeugkopf zur Führung der Schraube,
- eine Zuführeinheit zur Zuführung der Schraube in eine Bereitstellungsposition
- ein Schraubwerkzeug, welches zum Greifen eines Schraubenkopfes der Schraube ausgebildet ist und das mit Hilfe der Dreheinheit rotierbar und mit Hilfe der Vorschubeinheit in Axialrichtung verschiebbar ist,
- eine Steuervorrichtung zur Steuerung des Schraubvorgangs, wobei die Steuerung eines Vorschubanteils des Schraubvorgangs anhand einer momentanen Vorschubkraft erfolgt,
**dadurch gekennzeichnet, dass**
die Steuervorrichtung derart ausgebildet ist, dass anhand der momentanen Vorschubkraft und der momentanen Axialposition überprüft wird, ob das Schraubwerkzeug in korrektem Eingriff mit dem Schraubenkopf ist.

2. Schraubvorrichtung nach dem vorhergehenden Anspruch, wobei eine gemeinsame, abgestimmte Steuerung der Vorschubeinheit mit der Dreheinheit und/oder mit der Zuführeinheit erfolgt, wobei hierzu eine interaktive Steuerung der einen Einheit in Abhängigkeit von momentanen Zustandswerten der anderen Einheit erfolgt.

3. Schraubvorrichtung nach einem der vorhergehenden Ansprüche, wobei die Steuervorrichtung derart ausgebildet ist, dass während der gesamten Vorschubbewegung über den Hubbereich die momentane Vorschubkraft in Abhängigkeit der Axialposition erfasst und ausgewertet wird.

4. Schraubvorrichtung nach dem vorhergehenden Anspruch, wobei die Steuervorrichtung derart ausgebildet ist, dass in Abhängigkeit der hubwegabhängigen momentanen Vorschubkraft auf ein oder mehrere der folgenden Fehler insbesondere während eines Zustellanteils vor einem Eindrehen der Schraube in den Schraubpartner erkannt wird:
- Erkennen eines fehlenden oder fehlerhaften Teils, beispielsweise eine Schraube oder ein Werkstück,
- Erkennen einer Störkontur eines Gegenstandes oder Kollision mit einem Gegenstand.

5. Schraubvorrichtung nach einem der vorhergehenden Ansprüche, wobei die Steuervorrichtung derart ausgebildet ist, dass mehrere Axialpositionen mit unterschiedlichen Vorschubgeschwindigkeiten bei gleichzeitiger Überwachung der Vorschubkraft angefahren werden, wobei in Abhängigkeit der momentanen Axialposition und der momentanen Vorschubkraft unterschiedliche Umschaltpunkte definiert sind, in deren Abhängigkeit Änderungen in der Ansteuerung der Vorschubeinheit und / oder der Dreheinheit vorgenommen werden.

6. Schraubvorrichtung nach einem der vorhergehenden Ansprüche, welche einen Zuführkanal zum Zuführen der Schraube mit Hilfe von Druckluft in eine Bereitstellungsposition aufweist, wobei die Steuervorrichtung derart ausgebildet ist, dass nach einem Druckluft-betätigten Zuführen einer jeweiligen Schraube in die Bereitstellungsposition die Vorschubeinheit an eine Zwischenposition verfährt und dort bis zu einem Freigabesignal verharrt, wobei nach Erreichen der Zwischenposition eine Zufuhr von Druckluft unterbrochen wird.

7. Schraubvorrichtung nach einem der vorhergehenden Ansprüche, welche einen Zuführkanal zum Zuführen der Schraube in eine Bereitstellungsposition aufweist, wobei die Steuervorrichtung derart ausgebildet ist, dass nach einem Bereitstellen einer jeweiligen Schraube in der Bereitstellungsposition die Vorschubeinheit an eine Zwischenposition verfährt, in der das Schraubwerkzeug den Schraubenkopf greift und dort bis zu einem Freigabesignal verharrt.

8. Schraubvorrichtung nach einem der vorhergehenden Ansprüche, wobei die Steuervorrichtung derart ausgebildet ist, dass in Abhängigkeit der Richtung der Vorschubbewegung die Vorschubkraft in Abhängigkeit der Einwirkung der Gravitation kompensiert wird.

9. Schraubvorrichtung nach einem der vorhergehenden Ansprüche, wobei die Steuervorrichtung zum Herausdrehen einer Schraube ausgebildet ist, wobei hierzu ein Rückhub entsprechend eines vorgegebenen Kraftprofils gesteuert wird.

10. Schraubvorrichtung nach einem der vorhergehenden Ansprüche, wobei die Steuervorrichtung derart ausgebildet ist, dass eine Masse für eine insbesondere wechselbare Anbaukomponente parametrierbar ist und dass im Kraftprofil ein Gravitations-Einfluss der Anbaukomponente berücksichtigt wird, wobei bevorzugt eine momentane Orientierung des Werkzeugkopfes erfassbar ist und berücksichtigt wird.

11. Schraubvorrichtung nach einem der vorhergehenden Ansprüche, welche mehrere Dreheinheiten und mehrere Vorschubeinheiten aufweist, wobei die Steuervorrichtung derart ausgebildet ist, dass die Hubbewegungen der Vorschubeinheiten miteinander synchronisiert werden.

12. Schraubvorrichtung nach einem der vorhergehenden Ansprüche, wobei zur Durchführung eines jeweiligen Schraubvorgangs innerhalb eines Zyklus die Zuführeinheit, die Vorschubeinheit sowie die Dreheinheit jeweils individuelle Prozessschritte ausführen, wobei die individuellen Prozessschritte der Zuführeinheit und / oder der Dreheinheit durch die Steuervorrichtung in Abhängigkeit der momentanen Axialposition und / oder der momentanen Vorschubkraft der Vorschubeinheit angesteuert werden.

13. Schraubvorrichtung nach einem der vorhergehenden Ansprüche, wobei die Steuervorrichtung derart ausgebildet ist, dass folgende Schritte durchgeführt werden:
a) Zustellen des Schraubwerkzeugs zum Schraubenkopf,
b) Überprüfen des korrekten Eingriffs durch Auswertung der momentanen Daten zur Position und Vorschubkraft
c) im Falle eines nicht korrekten Eingriffs geändertes Ansteuern des Drehantriebs und/oder der Vorschubeinheit,
d) weiterer Vorschub und Überwachung der Position und Vorschubkraft, ob korrekter Eingriff erreicht ist,
e) bei Bedarf Wiederholen der Schritte b) bis d).

14. Schraubvorrichtung nach einem der vorhergehenden Ansprüche, wobei die Steuervorrichtung zur Erkennung eines Verschleißes der Vorschubeinheit ausgebildet ist und hierzu während einer zyklisch wiederkehrenden Hubbewegung mit gleichbleibenden Randbedingungen, insbesondere während eines Rückhubs, auftretende Kräfte erfasst und auswertet.

15. Schraubvorrichtung nach einem der vorhergehenden Ansprüche, wobei die Steuervorrichtung derart ausgebildet ist, dass die momentane Vorschubgeschwindigkeit und die momentane Drehgeschwindigkeit synchronisiert sind, und zwar derart, dass der Vorschub durch die Vorschubeinheit einer Axialbewegung entspricht, die sich ergibt aus einer vorgegebenen Steigung des Gewindes der Schraube und der momentanen Drehgeschwindigkeit.

## Claims

1. Screwing device for carrying out a screw-driving procedure in an automated manner, in which procedure a screw is screwed to a threaded partner in an axial direction, wherein the screwing device has
- an advancing unit for generating an axial advancing movement over a stroke range, wherein the advancing unit has an electric advancing motor and is designed for detecting momentary advancing values, specifically a momentary advancing force, a momentary advancing rate, and a momentary axial position;
- a rotating unit having an electric drive motor for generating a rotating movement, wherein the rotating unit is designed for detecting momentary rotational values, specifically for detecting a momentary rotating speed, a momentary torque and a momentary rotational angle;
- a tool head for guiding the screw;
- a feeding unit for feeding the screw into a standby position;
- a screw-driving tool which is designed for gripping a screw head of the screw and which is rotatable by means of the rotating unit and displaceable in the axial direction by means of the advancing unit;
- a control device for controlling the screw-driving procedure, wherein controlling an advancing fraction of the screw-driving procedure takes place by means of a momentary advancing force,
**characterized in that**
the control device is designed in such a manner that the momentary advancing force and the momentary axial position are used to verify whether the screw-driving tool is correctly engaged with the screw head.

2. Screwing device according to the preceding claim, wherein common, coordinated controlling of the advancing unit is performed by the rotating unit and/or by the feeding unit, wherein to this end interactive controlling of the one unit takes place as a function of momentary state values of the other unit.

3. Screwing device according to any one of the preceding claims, wherein the control device is designed in such a manner that, during the entire advancing movement over the stroke range, the momentary advancing force is detected and evaluated as a function of the axial position.

4. Screwing device according to the preceding claim, wherein the control device is designed in such a manner that, as a function of the stroke-travel-dependent momentary advancing force, one or a plurality of the following errors is detected in particular during an advancing fraction prior to driving the screw into the threaded partner:
- detection of a missing or faulty part, for example a screw or a workpiece;
- detection of an interference contour of an object, or collision with an object.

5. Screwing device according to one of the preceding claims, wherein the control device is designed in such a manner that a plurality of axial positions are approached at different advancing rates while simultaneously monitoring the advancing force, wherein defined as a function of the momentary axial position and the momentary advancing force are different switching points, as a function of which variations in terms of the actuation of the advancing unit and/or the rotating unit are performed.

6. Screwing device according to one of the preceding claims, which has a feeding duct for feeding the screw with the aid of compressed air into a standby position, wherein the control device is designed in such a manner that, after feeding a respective screw into the standby position by compressed-air activation, the advancing unit moves to an intermediate position and remains there up to a release signal, whereby a supply of compressed air is interrupted upon reaching the intermediate position.

7. Screwing device according to one of the preceding claims, which has a feeding duct for feeding the screw into a standby position, wherein the control device is designed in such manner that, after providing a respective screw in the standby position, the advancing unit moves to an intermediate position in which the screw-driving tool grips the screw head and remains there up to a release signal.

8. Screwing device according to one of the preceding claims, wherein the control device is designed in such a manner that, as a function the direction of the advancing movement, the advancing force is compensated as a function of the effect of gravitation.

9. Screwing device according to one of the preceding claims, wherein the control device is designed for driving out a screw, wherein for this purpose a return stroke according to a predetermined force profile is actuated.

10. Screwing device according to one of the preceding claims, wherein the control device is designed in such a manner that a mass for an in particular interchangeable attachment component can be parameterized, and that a gravitational effect of the attachment component is taken into account in the force profile, wherein preferably a momentary orientation of the tool head is detectable and taken into account.

11. Screwing device according to one of the preceding claims, which comprises a plurality of rotating units and a plurality of advancing units, wherein the control device is designed in such a manner that the stroke movements of the advancing units are mutually synchronized.

12. Screwing device according to one of the preceding claims, wherein for carrying out a respective screwing operation within a cycle, the feeding unit, the advancing unit and the rotating unit each carry out individual process steps, wherein the individual process steps of the advancing unit and/or the rotating unit are actuated by the control device as a function of the momentary axial position and/or the momentary advancing force of the advancing unit.

13. Screwing device according to one of the preceding claims, wherein the control device is designed in such a manner that the following steps are carried out:
a) moving the screw tool to the screw head;
b) verifying the correct engagement by evaluating the momentary data pertaining to the position and the advancing force;
c) in the event of incorrect engagement, modified actuation of the rotary drive and/or the advancing unit;
d) further advancing and monitoring the position and the advancing force as to whether a correct engagement has been achieved; and
e) repeating steps b) to d) as required.

14. Screwing device according to one of the preceding claims, wherein the control device is designed for detecting wear on the advancing unit, and for this purpose during a cyclically recurring stroke movement with constant parameters, in particular during a reverse stroke, detects and evaluates arising forces.

15. Screwing device according to one of the preceding claims, wherein the control device is designed in such a manner that the momentary advancing rate and the momentary rotation speed are synchronized, specifically in such a manner that the advancing by the advancing unit corresponds to an axial movement which results from a predefined pitch of the thread of the screw and the momentary rotating speed.

## Revendications

1. Dispositif de vissage pour l'exécution automatisée d'un processus de vissage dans lequel une vis est vissée avec une contrepartie de vissage dans la direction axiale, le dispositif de vissage présentant
- une unité d'avance pour produire un mouvement d'avance axial sur une plage de course, dans lequel l'unité d'avance présente un moteur d'avance électrique et est réalisée pour détecter des valeurs d'avance instantanées, notamment une force d'avance instantanée, une vitesse d'avance instantanée ainsi qu'une position axiale instantanée,
- une unité rotative pourvue d'un moteur d'entraînement électrique pour produire un mouvement de rotation, l'unité rotative étant réalisée pour détecter des valeurs de rotation instantanées, notamment pour détecter une vitesse de rotation instantanée, un couple instantané ainsi qu'un angle de rotation instantané,
- une tête d'outil pour guider la vis,
- une unité d'amenée pour amener la vis dans une position de fourniture,
- un outil de vissage qui est réalisé pour saisir une tête de vis de la vis, et qui peut être amené à tourner à l'aide de l'unité rotative et peut être décalé à l'aide de l'unité d'avance dans la direction axiale,
- un dispositif de commande pour commander le processus de vissage, la commande d'un pourcentage d'avance du processus de vissage étant effectuée à l'aide d'une force d'avance instantanée,
**caractérisé en ce que**
le dispositif de commande est réalisé de telle sorte que la force d'avance instantanée et la position axiale instantanée permettent de vérifier si l'outil de vissage se trouve en mise en prise correcte avec la tête de vis.

2. Dispositif de vissage selon la revendication précédente, dans lequel une commande coordonnée commune de l'unité d'avance avec l'unité rotative et/ou avec l'unité d'amenée est effectuée, dans lequel à cet effet, une commande interactive d'une unité est effectuée en fonction de valeurs d'état instantanées de l'autre unité.

3. Dispositif de vissage selon l'une quelconque des revendications précédentes, dans lequel le dispositif de commande est réalisé de telle sorte que pendant tout le mouvement d'avance sur la plage de course, la force d'avance instantanée est détectée et évaluée en fonction de la position axiale.

4. Dispositif de vissage selon la revendication précédente, dans lequel le dispositif de commande est réalisé de telle sorte qu'en fonction de la force d'avance instantanée dépendant de la course, une ou plusieurs des erreurs suivantes sont identifiées en particulier pendant un pourcentage d'approche avant le serrage de la vis dans la contrepartie de vissage :
- identifier une pièce manquante ou défectueuse, par exemple une vis ou une pièce à travailler,
- identifier un contour gênant d'un objet ou une collision avec un objet.

5. Dispositif de vissage selon l'une quelconque des revendications précédentes, dans lequel le dispositif de commande est réalisé de telle sorte que plusieurs positions axiales sont desservies à différentes vitesses d'avance tout en surveillant la force d'avance, dans lequel, en fonction de la position axiale instantanée et de la force d'avance instantanée, différents points de commutation sont définis en fonction desquels des modifications sont effectuées au niveau du pilotage de l'unité d'avance et/ou de l'unité rotative.

6. Dispositif de vissage selon l'une quelconque des revendications précédentes, qui présente un canal d'amenée pour amener la vis dans une position de fourniture à l'aide d'air comprimé, dans lequel le dispositif de commande est réalisé de telle sorte qu'après une amenée actionnée par air comprimé d'une vis respective dans la position de fourniture, l'unité d'avance se déplace dans une position intermédiaire et y reste jusqu'à un signal de déblocage, dans lequel une amenée d'air comprimé est interrompue lorsque la position intermédiaire est atteinte.

7. Dispositif de vissage selon l'une quelconque des revendications précédentes, qui présente un canal d'amenée pour amener la vis dans une position de fourniture, dans lequel le dispositif de commande est réalisé de telle sorte qu'après une fourniture d'une vis respective dans la position de fourniture, l'unité d'avance se déplace dans une position intermédiaire dans laquelle l'outil de vissage saisit la tête de vis et y reste jusqu'à un signal de déblocage.

8. Dispositif de vissage selon l'une quelconque des revendications précédentes, dans lequel le dispositif de commande est réalisé de telle sorte qu'en fonction de la direction du mouvement d'avance, la force d'avance est compensée en fonction de l'effet de la gravité.

9. Dispositif de vissage selon l'une quelconque des revendications précédentes, dans lequel le dispositif de commande est réalisé pour desserrer une vis, dans lequel une course de retour est commandée à cet effet selon un profil de force prédéfini.

10. Dispositif de vissage selon l'une quelconque des revendications précédentes, dans lequel le dispositif de commande est réalisé de telle sorte qu'une masse pour un composant rapporté, en particulier interchangeable, est paramétrable, et que dans le profil de force une influence de la gravité du composant rapporté est prise en compte, de préférence une orientation instantanée de la tête d'outil pouvant être détectée et étant prise en compte.

11. Dispositif de vissage selon l'une quelconque des revendications précédentes, qui présente plusieurs unités rotatives et plusieurs unités d'avance, dans lequel le dispositif de commande est réalisé de telle sorte que les mouvements de course des unités d'avance sont synchronisés entre eux.

12. Dispositif de vissage selon l'une quelconque des revendications précédentes, dans lequel pour l'exécution d'un processus de vissage respectif à l'intérieur d'un cycle, l'unité d'amenée, l'unité d'avance ainsi que l'unité rotative exécutent respectivement des étapes de processus individuelles, dans lequel les étapes de processus individuelles de l'unité d'amenée et/ou de l'unité rotative sont pilotées par le dispositif de commande en fonction de la position axiale instantanée et/ou de la force d'avance instantanée de l'unité d'avance.

13. Dispositif de vissage selon l'une quelconque des revendications précédentes, le dispositif de commande étant réalisé de telle sorte que les étapes suivantes sont exécutées :
a) approcher l'outil de vissage de la tête de vis,
b) vérifier la mise en prise correcte en évaluant les données instantanées concernant la position et la force d'avance,
c) dans le cas d'une mise en prise incorrecte, pilotage modifié du dispositif d'entraînement rotatif et/ou de l'unité d'avance,
d) avance supplémentaire et surveillance de la position et de la force d'avance pour savoir si une mise en prise correcte est atteinte,
e) si nécessaire, répéter les étapes b) à d).

14. Dispositif de vissage selon l'une quelconque des revendications précédentes, dans lequel le dispositif de commande est réalisé pour identifier une usure de l'unité d'avance et détecte et évalue à cet effet des forces apparaissant pendant un mouvement de course récurrent de manière cyclique sous des contraintes constantes, en particulier pendant une course de retour.

15. Dispositif de vissage selon l'une quelconque des revendications précédentes, dans lequel le dispositif de commande est réalisé de telle sorte que la vitesse d'avance instantanée et la vitesse de rotation instantanée sont synchronisées, notamment de telle sorte que l'avance de l'unité d'avance correspond à un mouvement axial qui résulte d'un pas prédéfini du filetage de la vis et de la vitesse de rotation instantanée.
